# EUROPEAN PATENT APPLICATION

(11) **EP 4 521 507 A1**
(43) Date of publication of application: **12.03.2025**
(21) Application number: 22947112.3
(22) Date of filing: 20.06.2022
(51) Int. Cl.: H01M 10/0567, H01M 10/054

(54) **ELECTROLYTE, SODIUM ION SECONDARY BATTERY, BATTERY MODULE, BATTERY PACK, AND ELECTRIC APPARATUS**

(71) Applicant: Contemporary Amperex Technology (Hong Kong) Limited, Hong Kong (HK)
(72) Inventor: ZOU, Hailin, Ningde, Fujian 352100 (CN); CHEN, Peipei, Ningde, Fujian 352100 (CN)
(74) Representative: Gong, Jinping
(86) International application number: PCT/CN2022/099798
(87) International publication number: WO 2023/245331

(57) **Abstract**

This application relates to an electrolyte for secondary batteries, which includes an electrolyte salt, an organic solvent, and an additive, where the additive includes an amine compound and a sulfur-containing compound with a boiling point not greater than 70°C, where a mass percentage of the sulfur-containing compound in the electrolyte is 0.06% to 8%, optionally 0.08% to 6%, and a mass ratio of the sulfur-containing compound to the amine compound is 1:(0.08-13), optionally 1:(0.1-11), or further optionally 1:(0.5-2.5). The electrolyte disclosed in this application can significantly improve cycling performance of secondary batteries while reducing volatilization of sulfur-containing gases, thereby enhancing storage performance of the secondary batteries.

## Description

### TECHNICAL FIELD

This application relates to the field of sodium-ion battery technologies, and in particular, to an electrolyte for secondary batteries, a sodium-ion secondary battery, a battery module, a battery pack, and an electric apparatus.

### BACKGROUND

Due to increasing energy demand, rising costs of refining fossil fuels, and severe environmental pollution caused by the use of fossil energy, people are seeking environmentally friendly ways of energy production and storage. Battery-based electrochemical energy storage technology offers high efficiency, flexible configurations, abilities to meet the needs of various power grids, long cycle life, and low maintenance costs. This provides a feasible energy storage solution for utilizing intermittent natural resources (such as wind energy and solar energy) for grid-connected power generation. Sodium-ion batteries, with advantages such as abundant sodium resources and low costs, are a promising energy storage battery system. The sodium-ion batteries have a similar structure to lithium-ion batteries, including a positive electrode and a negative electrode capable of intercalating and deintercalating sodium ions, as well as an electrolyte that facilitates the transport of sodium ions. Similar to the lithium-ion batteries, during an initial charging process, reduction products of the electrolyte form a passivation film at a negative electrode interface to prevent further reduction decomposition of the electrolyte. Therefore, performance of this passivation film directly affects performance of the battery.

Commonly used solvents for sodium-ion batteries are linear carbonate and cyclic carbonate, in which the components forming the passivation film at the negative electrode interface are mainly alkyl sodium carbonate (ROCO₂Na) and sodium carbonate. However, alkyl sodium carbonate has a higher solubility in carbonate solvents compared to alkyl lithium carbonate, making the passivation film at the negative electrode interface of sodium-ion batteries highly unstable. The electrolyte continuously undergoes side reactions with the negative electrode, leading to a limited service life of the sodium-ion batteries that fall short of practical application requirements.

Electrolyte additive technologies for lithium-ion batteries have been well developed, and some of these technologies have been applied to the electrolyte of sodium-ion batteries. S. Komaba et al. have compared effects of well-known electrolyte additives in lithium-ion batteries, such as fluoroethylene carbonate (FEC), difluoroethylene carbonate (DFEC), vinylene carbonate (VC), and ethyl sulfite (ES), on improvement of sodium-ion batteries. They found that only FEC significantly improves the lifespan of sodium-ion batteries (ACS Applied Mater. Inter., 3(2011) 4165-4168). CN109786827A reported the combined use of FEC, sulfone compound, and sulfonic ester compound. These electrolyte additives can be used to synergistically stabilize the positive and negative electrode interfaces of sodium-ion batteries, resulting in a good service life. However, these organic additives severely deteriorate internal resistance of the battery due to polymerized organics of reduction products at the negative electrode.

CN112310473A reported use of non-metallic oxides in lithium-ion battery electrolytes to increase inorganic components in the negative electrode SEI (solid electrolyte interphase). The non-metallic oxides include sulfur dioxide, sulfur trioxide, carbon dioxide, nitric oxide, nitrogen dioxide, dinitrogen trioxide, and other gaseous non-metallic oxides. Although these gaseous non-metallic oxides have some solubility in the electrolyte, they still exhibit strong volatility, especially for some environmentally unfriendly substances, causing difficulties in production and manufacturing processes.

CN106415909A reported addition of a large amount of saturated sulfur dioxide in an ionic liquid to improve conductivity of an inorganic electrolyte and enhance performance of sodium-sulfur dioxide secondary batteries, while low-volatility ionic liquids can suppress gas generation in the battery caused by extensive use of SO₂. However, ionic liquids are expensive and incompatible with carbon material negative electrodes, making them unsuitable for direct use in sodium-ion batteries with existing amorphous carbon material negative electrode systems.

Currently, there are many issues with the electrolyte additives used in sodium-ion secondary batteries. Therefore, there is an urgent need to develop new electrolytes for secondary batteries to improve the electrochemical performance of the sodium-ion secondary batteries and prolong service life of the sodium-ion secondary batteries.

### SUMMARY

This application is made in view of the foregoing topic and is intended to provide an electrolyte for secondary batteries, a sodium-ion secondary battery, a battery module, a battery pack, and an electric apparatus, aiming to improve stability of a passivation film at a negative electrode interface of sodium-ion secondary batteries in the electrolyte and prolong service life of the sodium-ion secondary batteries.

To achieve the foregoing objective, a first aspect of this application provides an electrolyte for secondary batteries including an electrolyte salt, an organic solvent, and an additive,
where the additive comprises an amine compound and a sulfur-containing compound with a boiling point not greater than 70°C, where a mass percentage of the sulfur-containing compound in the electrolyte is 0.06% to 8%, optionally 0.08% to 6%, and a mass ratio of the sulfur-containing compound to the amine compound is 1:(0.08-13), optionally 1:(0.1-11), or further optionally 1:(0.5-2.5).

In any embodiment, a mass percentage of the amine compound in the electrolyte is 0.06% to 8%, optionally 0.08% to 6%.

In any embodiment, a combined mass percentage of the amine compound and the sulfur-containing compound in the electrolyte is 0.5% to 10%, optionally 1% to 7%.

In any embodiment, the amine compound is selected from one or more compounds of the following formula I, formula II, and formula III: 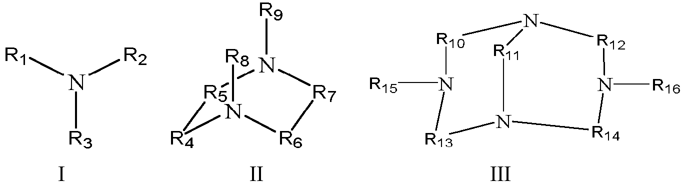
where R₁-R₃, R₈, R₉, R₁₅, and R₁₆ each independently are substituents selected from hydrogen atom, halogen atom, nitro group; and
a C₁-C₂₀ alkyl group, a C₂-C₂₀ alkenyl group, a C₆-C₂₆ aryl group, a C₁-C₂₀ alkylene carboxyl group, a carbonyl C₁-C₂₀ alkyl group, and a C₆-C₂₆ aryloxy group, optionally a C₁-C₆ alkyl group, and may further be optionally substituted with one or more groups selected from halogen atoms, a hydroxyl group, an amino group, a nitro group, a sulfonic acid group, and a sulfonyl group;
where R₁ is connected to R₂ or R₃, R₈ is connected to R₉, and R₁₅ is connected to R₁₆ via chemical bonds to form a C₁-C₂₀ alkylene group, a C₂-C₂₀ alkenylene group, C₆-C₂₆ arylene group, a carbonyl C₁-C₂₀ alkylene group, or a C₆-C₂₆ aryleneoxy group, optionally a C₁-C₆ alkylene group, where the substituents may further be optionally one or more groups selected from a C₁-C₆ alkyl group, halogen atoms, a hydroxyl group, an amino group, a nitro group, a carboxyl group, a sulfonic acid group, and a sulfonyl group; and
R₄-R₇ and R₁₀-R₁₄ each independently are substituents selected from a C₁-C₂₀ alkylene group, a C₂-C₂₀ alkenylene group, a C₆-C₂₆ arylene group, a carbonyl C₁-C₂₀ alkylene group, or a C₆-C₂₆ aryleneoxy group, optionally a C₁-C₆ alkylene group, where the substituents may further be optionally one or more groups selected from a C₁-C₆ alkyl group, halogen atoms, a hydroxyl group, an amino group, a nitro group, a carboxyl group, a sulfonic acid group, and a sulfonyl group;
where the halogen atoms are selected from one or more of F, Cl, and Br.

In any embodiment, the compound of formula I is selected from one or more of triethylamine, triethanolamine, diethylamine, diethanolamine, monoethylamine, monoethanolamine, 5-(diethylamino)pentylamine, 1-methylpyrrolidine, and triallylamine;
the compound of formula II is selected from one or more of triethylenediamine, 2-methyltriethylenediamine, 1,2-dimethylpiperazine, N-ethylpiperazine, 1-allylpiperazine, piperazine, and 1-ethylhomopiperazine; and
the compound of formula III is selected from one or more of hexamethylenetetramine, 1,3,6,8-tetraazatricyclo[4.3.1.13,8]undecane (CAS No. 125251-91-4), 3,7-dimethyl-1,3,5,7-tetraaza Bicyclo[3.3.1]nonane (CAS No. 124469-89-2), 1,3,5,7-tetraazabicyclo[3.3.1]nonane-3-methanamine (CAS No. 69470-05-9), and N,N'-dinitrosopentamethylenetetramine.

In any embodiment, molecular weight of the sulfur-containing compound is 50 g/mol to 200 g/mol.

In any embodiment, the sulfur-containing compounds are selected from one or more of sulfur hexafluoride (SF₆), sulfur tetrafluoride (SF₄), sulfuryl fluoride (SO₂F₂), sulfur dioxide (SO₂), sulfur trioxide (SO₃), carbon disulfide (CS₂), dimethyl sulfide (CH₂SCH₃), methyl ethyl sulfide (CH₂SCH₂CH₃), sulfur monofluoride (S₂F₂), sulfur difluoride (SF₂), thionyl fluoride (SOF₂) and tetrafluoro thionyl (SOF₄).

In any embodiment, the electrolyte salt is selected from one or more of NaPF₆, NaBF₄, NaN(SO₂F)₂ (NaFSI), NaClO₄, NaAsF₆, NaB(C₂O₄)₂ (NaBOB), NaBF₂(C₂O₄) (NaDFOB), NaN(SO₂R_{F})₂, and NaN(SO₂F)(SO₂R_{F}), where R_{F} represents C_{b}F_{2b+1}, where b is an integer in a range of 1 to 10, optionally in a range of 1 to 3, and further optionally, R_{F} is -CF₃, -C₂F₅, or -CF₂CF₂CF₃.

In any embodiment, the organic solvent includes a carbonate-based organic solvent.

In any embodiment, the carbonate-based organic solvent is selected from one or more of ethylene carbonate, propylene carbonate, methylethyl carbonate, diethyl carbonate, dimethyl carbonate, dipropyl carbonate, methylpropyl carbonate, ethylpropyl carbonate, and butylene carbonate.

In any embodiment, the electrolyte further includes fluoroethylene carbonate, where a mass percentage of fluoroethylene carbonate in the electrolyte is 0.01% to 10%, optionally 0.1% to 8%.

A second aspect of this application provides a sodium-ion secondary battery including a positive electrode plate, a separator, a negative electrode plate, and the electrolyte for a secondary battery according to the first aspect of this application.

A third aspect of this application provides a battery module, including the sodium-ion secondary battery in the second aspect of this application.

A fourth aspect of this application provides a battery pack, including the battery module in the third aspect of this application.

A fifth aspect of this application provides an electric apparatus including at least one selected from the sodium-ion secondary battery according to the second aspect of this application, the battery module according to the third aspect of this application, or the battery pack according to the fourth aspect of this application.

The electrolyte disclosed in this application can significantly improve cycling performance of sodium-ion secondary batteries while reducing volatilization of sulfur-containing compounds, thereby enhancing storage performance of the sodium-ion secondary batteries.

### BRIEF DESCRIPTION OF DRAWINGS

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.

### Description of reference signs:

1. battery pack; 2. upper box body; 3. lower box body; 4. battery module; 5. secondary battery; 51. housing; 52. electrode assembly; and 53. top cover assembly.

### DESCRIPTION OF EMBODIMENTS

Embodiments that specifically disclose an electrolyte for secondary batteries, a sodium-ion secondary battery, a battery module, a battery pack, and an electric apparatus in this application are described in detail below with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, "include" and "contain" mentioned in this application are inclusive or may be exclusive. For example, terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Unless otherwise specified, in this application, all operations are performed at room temperature (25°C) and atmospheric pressure (101 kPa).

Unexpectedly, the inventors have found that adding low-boiling (such as ≤ 70°C) sulfur-containing compounds to the electrolyte of sodium-ion batteries can stabilize a passivation film on the negative electrode and significantly prolong cycling life of sodium-ion batteries. Without being bound by any theory, it is now believed that the sulfur-containing compound, due to its poor oxidation and reduction resistance and excellent diffusion rate, preferentially react with the negative electrode surface in the presence of carbonate solvents to form sulfur-containing inorganic salt products, which have lower solubility in the carbonate solvent compared to alkyl sodium carbonate.

In addition, compared to commonly used high-boiling sulfur-containing compounds in the field, the use of a low-boiling sulfur-containing compound can effectively improve internal resistance of the battery and significantly enhance cycling performance at room temperature. This is because low-boiling sulfur-containing compounds not only reduce viscosity of the electrolyte but also form a stable and low-resistance passivation film on the negative electrode.

However, these low-boiling sulfur-containing compounds still exhibit strong volatility after dissolution in the electrolyte, causing environmental pollution during battery production. Moreover, high gas pressure can lead to cell swelling and pose safety hazards. Unexpectedly, the inventors have found that when an amine compound in this application is used in combination with the low-boiling sulfur-containing compound in the electrolyte of sodium-ion batteries, it not only does not deteriorate the electrochemical performance of sodium-ion secondary batteries, but also significantly prolongs cycling and storage life of sodium-ion batteries while reducing the volatility of low-boiling sulfur-containing compound.

Therefore, a first aspect of this application provides an electrolyte for secondary batteries including an electrolyte salt, an organic solvent, and an additive,
where the additive includes an amine compound and a sulfur-containing compound with a boiling point not exceeding 70°C, where a mass percentage of the sulfur-containing compounds in the electrolyte is 0.06% to 8%, optionally 0.08% to 6%, and further optionally 0.1% to 2%, and a mass ratio of the sulfur-containing compounds to the amine compounds is 1:(0.08-13), optionally 1:(0.1-11), further optionally 1:(0.3-6), and still further optionally 1:(0.5-2.5).

When the mass percentage of the sulfur-containing compound is excessively low, that is, the amount is excessively small, a formed passivation film on the positive and negative electrodes is insufficient to prevent further reactions of the electrolyte, resulting in insignificant improvement in battery performance. When the mass percentage is too high, reaction products generated by oxidation decomposition can accumulate on the positive electrode, leading to an increase in the membrane resistance at the interface between a positive active substance layer and the electrolyte, thereby deteriorating battery performance.

Amine compounds are typical Lewis bases due to the presence of lone pair electrons on the nitrogen atoms. The amine compounds are added to the electrolyte to complex with the low-boiling sulfur-containing compounds in the electrolyte, significantly reducing the volatility of the low-boiling sulfur-containing compounds.

In some embodiments, the mass percentage of the amine compound in the electrolyte is 0.06% to 8%, optionally 0.08% to 6%, and further optionally 1% to 4.5%.

Controlling the percentage of the amine compound within the foregoing range, on the one hand, can provide sufficient amine compounds and sulfur-containing compounds for complexation, further improving the suppression effect on the volatility of sulfur-containing compounds. On the other hand, controlling the percentage of the amine compound that is not oxidation-resistant can further improve the cycling performance.

In some embodiments, a combined mass percentage of the amine compound and the sulfur-containing compound in the electrolyte is 0.5% to 10%, optionally 1% to 7%.

In this application, detection of low-boiling sulfur-containing compounds in the electrolyte is performed according to GT/T 17040-2008 "Determination of Sulfur Content in Petroleum and Petroleum Products by Energy Dispersive X-ray Fluorescence Spectrometry". A standard curve is prepared based on a relationship between X-ray fluorescence intensity and content of standard samples for quantitative analysis of unknown samples.

In this application, it should be understood that the term "sulfur-containing compounds with a boiling point not exceeding 70°C" refers to sulfur-containing compounds with a boiling point not exceeding 70°C as determined at atmospheric pressure.

In this application, the boiling point can be determined according to GB/T 616-2006.

In some embodiments, the sulfur-containing compound is gaseous at atmospheric pressure and room temperature.

In some embodiments, the amine compound is selected from one or more compounds of the following formula I, formula II, and formula III: 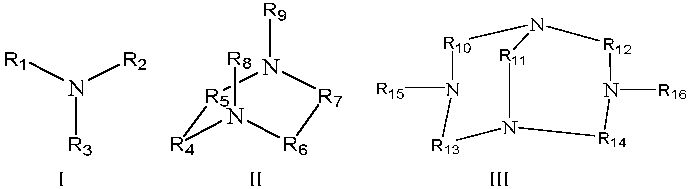
where R₁-R₃, R₈, R₉, R₁₅, and R₁₆ each independently are substituents selected from hydrogen atom, halogen atom, nitro group; and
a C₁-C₂₀ alkyl group, a C₂-C₂₀ alkenyl group, a C₆-C₂₆ aryl group, a C₁-C₂₀ alkylene carboxyl group, a carbonyl C₁-C₂₀ alkyl group, and a C₆-C₂₆ aryloxy group, optionally a C₁-C₆ alkyl group, and may further be optionally substituted with one or more groups selected from halogen atoms, a hydroxyl group, an amino group, a nitro group, a sulfonic acid group, and a sulfonyl group;
where R₁ is connected to R₂ or R₃, R₈ is connected to R₉, and R₁₅ is connected to R₁₆ via chemical bonds to form a C₁-C₂₀ alkylene group, a C₂-C₂₀ alkenylene group, C₆-C₂₆ arylene group, a carbonyl C₁-C₂₀ alkylene group, or a C₆-C₂₆ aryleneoxy group, optionally a C₁-C₆ alkylene group, where the substituents may further be optionally one or more groups selected from a C₁-C₆ alkyl group, halogen atoms, a hydroxyl group, an amino group, a nitro group, a carboxyl group, a sulfonic acid group, and a sulfonyl group; and
R₄-R₇ and R₁₀-R₁₄ each independently are substituents selected from a C₁-C₂₀ alkylene group, a C₂-C₂₀ alkenylene group, a C₆-C₂₆ arylene group, a carbonyl C₁-C₂₀ alkylene group, or a C₆-C₂₆ aryleneoxy group, optionally a C₁-C₆ alkylene group, where the substituents may further be optionally one or more groups selected from a C₁-C₆ alkyl group, halogen atoms, a hydroxyl group, an amino group, a nitro group, a carboxyl group, a sulfonic acid group, and a sulfonyl group;
where the halogen atoms are selected from one or more of F, Cl, and Br.

In this application, the term "C₁-C₂₀ alkyl group" refers to a saturated straight-chain or branched-chain hydrocarbon with 1 to 20 carbon atoms, such as a methyl group, an ethyl group, an n-propyl group, an isopropyl group, an n-butyl group, an isobutyl group, a sec-butyl group, a tert-butyl group, a pentyl group, a 1-methylbutyl group, a 2-methylbutyl group, a 3-methylbutyl group, a 1,2-dimethylpropyl group, a 1,1-dimethylpropyl group, a 2,2-dimethylpropyl group, a 1-ethylpropyl group, a hexyl group, a 1-methylpentyl group, a 2-methylpentyl group, a 3-methylpentyl group, a 4-methylpentyl group, a 1,2-dimethylpropyl group, a 1,3-dimethylbutyl group, a 1,4-dimethylbutyl group, a 2,3-dimethylbutyl group, a 1,1-dimethylbutyl group, a 2,2-dimethylbutyl group, a 3,3-dimethylbutyl group, a 1,1,2-trimethylpropyl group, a 1,2,2-trimethylpropyl group, a 1-ethylbutyl group, and a 2-ethylbutyl group. Optionally, it may include an alkyl group with 1 to 4 carbon atoms, particularly a methyl group, an ethyl group, an n-propyl group, an isopropyl group, an n-butyl group, an isobutyl group, a sec-butyl group, or a tert-butyl group. The term "C₁-C₂₀ alkylene group" refers to a divalent group derived from the foregoing "C₁-C₂₀ alkyl group".

In this application, the term "C₂-C₂₀ alkenyl group" refers to an unsaturated straight-chain or branched-chain hydrocarbon group with 2 to 20 carbon atoms and a double bond at any position. Examples include but are not limited to a vinyl group, an allyl group, a 1-propenyl group, an isopropenyl group, a 1-butenyl group, a 2-butenyl group, a 3-butenyl group, a 1,3-butadienyl group, a 1-pentenyl group, a 2-pentenyl group, a 3-pentenyl group, a 4-pentenyl group, a 1,3-pentadienyl group, a 1-hexenyl group, a 2-hexenyl group, a 3-hexenyl group, a 4-hexenyl group, a 5-hexenyl group, and a 1,4-hexadienyl group. The term "C₂-C₂₀ alkenylene group" refers to a divalent group derived from the foregoing "C₂-C₂₀ alkenyl group".

In this application, the term "C₆-C₂₆ aryl group" refers to a monocyclic, bicyclic, or polycyclic aromatic hydrocarbon system with 6 to 26 carbon atoms. Examples include but are not limited to a phenyl group, a methylphenyl group, an ethylphenyl group, an n-propylphenyl group, an isopropylphenyl group, an n-butylphenyl group, an isobutylphenyl group, a tert-butylphenyl group, a naphthyl group, an anthracenyl group, and a phenanthrenyl group, and preferably a phenyl group, a methylphenyl group, an ethylphenyl group, and an n-propylphenyl group. The term "C₆-C₂₆ arylene group" refers to a divalent group derived from the foregoing "C₆-C₂₆ aryl group".

In this application, the term "C₆-C₂₆ aryloxy group" refers to an aryl hydrocarbon group with 6 to 26 carbon atoms and at least one oxygen atom. Examples include but are not limited to a methoxyphenyl group, an ethoxyphenyl group, a propoxyphenyl group, an isopropoxyphenyl group, a butoxyphenyl group, an isobutoxyphenyl group, a tert-butoxyphenyl group, a methoxynaphthyl group, an ethoxynaphthyl group, a propoxynaphthyl group, an isopropoxynaphthyl group, an abutoxynaphthyl group, an isobutoxy naphthyl group, a methoxy anthracenyl group, an ethoxy anthracenyl group, a propoxy anthracenyl group, a methoxy phenanthryl group, an ethoxy phenanthrenyl group, and a propoxyphenanthrenyl group, and preferably a methoxyphenyl group, an ethoxyphenyl group, a propoxyphenyl group, and a butoxyphenyl group. The term "C₆-C₂₆ aryleneoxy group" refers to a divalent group derived from the foregoing "C₆-C₂₆ aryloxy group".

In this application, the term "chemical bond" refers to various types of chemical bonds well known to persons skilled in the art, such as single bonds, double bonds, or triple bonds formed between carbon atoms and carbon atoms, or single bonds, double bonds, or triple bonds formed between carbon atoms and other heteroatoms.

In some embodiments, the compound of formula I is selected from one or more of triethylamine, triethanolamine, diethylamine, diethanolamine, monoethylamine, monoethanolamine, 5-(diethylamino)pentylamine, 1-methylpyrrolidine, and triallylamine;
the compound of formula II is selected from one or more of triethylenediamine, 2-methyltriethylenediamine, 1,2-dimethylpiperazine, N-ethylpiperazine, 1-allylpiperazine, piperazine, and 1-ethylhomopiperazine; and
the compound of formula III is selected from one or more of hexamethylenetetramine, 1,3,6,8-tetraazatricyclo[4.3.1.13,8]undecane (CAS No. 125251-91-4), 3,7-dimethyl-1,3,5,7-tetraaza Bicyclo[3.3.1]nonane (CAS No. 124469-89-2), 1,3,5,7-tetraazabicyclo[3.3.1]nonane-3-methanamine (CAS No. 69470-05-9), and N,N'-dinitrosopentamethylenetetramine.

In some embodiments, molecular weight of the sulfur-containing compound is 50 g/mol to 200 g/mol, optionally 52 g/mol to 100 g/mol.

In some embodiments, the sulfur-containing compounds are selected from one or more of sulfur hexafluoride (SF₆), sulfur tetrafluoride (SF₄), sulfuryl fluoride (SO₂F₂), sulfur dioxide (SO₂), sulfur trioxide (SO₃), carbon disulfide (CS₂), dimethyl sulfide (CH₂SCH₃), methyl ethyl sulfide (CH₂SCH₂CH₃), sulfur monofluoride (S₂F₂), sulfur difluoride (SF₂), thionyl fluoride (SOF₂), and thionyl tetrafluoride (SOF₄).

In some embodiments, the electrolyte salt is selected from one or more of NaPF₆, NaBF₄, NaN(SO₂F)₂ (NaFSI), NaClO₄, NaAsF₆, NaB(C₂O₄)₂ (NaBOB), NaBF₂(C₂O₄) (NaDFOB), NaN(SO₂R_{F})₂, and NaN(SO₂F)(SO₂R_{F}), where R_{F} represents C_{F}, where b is an integer in a range of 1 to 10, optionally in a range of 1 to 3, and further optionally, R_{F} is -CF₃, -C₂F₅, or -CF₂CF₂CF₃;
optionally, the electrolyte salt is selected from one or more of NaPF₆, NaN(SO₂F)₂, NaN(CF₃SO₂)₂, NaB(C₂O₄)₂, and NaBF₂(C₂O₄); and
further optionally, the electrolyte salt is selected from one or more of NaPF₆, NaN(SO₂F)₂, and NaBF₂(C₂O₄).

In some embodiments, the amine compounds are selected from one or more of triethylamine, triethanolamine, diethylamine, diethanolamine, monoethylamine, monoethanolamine, triethylenediamine, and hexamethylenetetramine, optionally selected from one or more of triethylamine, triethanolamine, diethanolamine, triethylenediamine, and hexamethylenetetramine.

In some embodiments, molecular weight of the amine compound is 40 g/mol to 200 g/mol, optionally 44 g/mol to 190 g/mol.

In this application, the molecular weights of the sulfur-containing compound and the amine compound can be determined via conventional methods known in the art, such as gas chromatography-mass spectrometry analysis.

In some embodiments, the sulfur-containing compounds are selected from one or more of sulfur hexafluoride (SF₆), sulfur tetrafluoride (SF₄), sulfuryl fluoride (SO₂F₂), sulfur dioxide (SO₂), sulfur trioxide (SO₃), carbon disulfide (CS₂), dimethyl sulfide (CH₂SCH₃), methyl ethyl sulfide (CH₂SCH₂CH₃), sulfur monofluoride (S₂F₂), sulfur difluoride (SF₂), thionyl fluoride (SOF2) and tetrafluoro thionyl (SOF₄), and optionally selected from one or more of sulfur hexafluoride (SF₆), sulfur tetrafluoride (SF₄), sulfuryl fluoride (SO₂F₂), sulfur dioxide (SO₂), and sulfur trioxide (SO₃).

In any embodiment, the electrolyte salt is selected from one or more of NaPF₆, NaBF₄, NaN(SO₂F)₂ (NaFSI for short), NaClO₄, NaAsF₆, NaB(C₂O₄)₂ (NaBOB for short), NaBF₂(C₂O₄) (NaDFOB for short), NaN(SO₂R_{F})₂, and NaN(SO₂F)(SO₂R_{F}), where R_{F} represents C_{b}F_{2b+1}, where b is an integer in a range of 1 to 10, optionally in a range of 1 to 3, and further optionally, R_{F} is -CF₃, -C₂F₅, or -CF₂CF₂CF₃;
optionally, the electrolyte salt is selected from one or more of NaPF₆, NaN(SO₂F)₂, NaN(CF₃SO₂)₂, NaB(C₂O₄)₂, and NaBF₂(C₂O₄); and
further optionally, the electrolyte salt is selected from one or more of NaPF₆, NaN(SO₂F)₂, and NaBF₂(C₂O₄).

In some embodiments, a mass percentage of the electrolyte salt in the electrolyte is 3% to 30%, optionally 5% to 15%.

In some embodiments, the organic solvent includes a carbonate-based organic solvent. Optionally, the organic solvent is a carbonate-based organic solvent.

In some embodiments, a mass percentage of the carbonate-based organic solvent in the organic solvent is 50% to 100%, optionally 60% to 95%, further optionally 65% to 90%, and still further optionally 70% to 85%.

In some embodiments, the carbonate-based organic solvent is selected from one or more of ethylene carbonate, propylene carbonate, methylethyl carbonate, diethyl carbonate, dimethyl carbonate, dipropyl carbonate, methylpropyl carbonate, ethylpropyl carbonate, and butylene carbonate.

In some embodiments, a mass percentage of the organic solvent in the electrolyte is 50% to 97%, optionally 60% to 90%.

In some embodiments, the organic solvent further includes one or more of methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, diethyl sulfone, 1,3-dioxolane, tetrahydrofuran, glycol dimethyl ether, and acetonitrile, where a mass percentage of these additives in the organic solvent is 0.5% to 50%, optionally 3% to 30%, further optionally 5% to 20%, and still further optionally 8% to 15%.

In some embodiments, the electrolyte further includes fluoroethylene carbonate (CAS No. 114435-02-8), where a mass percentage of fluoroethylene carbonate in the electrolyte is 0.01% to 10%, optionally 0.1% to 8%, and further optionally 0.5% to 5%.

By using fluoroethylene carbonate and sulfur-containing compound together, a tough and high-strength passivation film can be formed on surface of the positive and negative electrodes. In addition, the sulfur-containing compound can suppress reduction of fluoroethylene carbonate near the passivation film, thereby inhibiting the deterioration of the internal resistance. When a percentage of fluoroethylene carbonate falls within the foregoing range, an interface passivation film can be properly formed to prevent further reaction of the electrolyte, further improving the cycling performance.

In some embodiments, the electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

A second aspect of this application provides a sodium-ion secondary battery including a positive electrode plate, a separator, a negative electrode plate, and the electrolyte for a secondary battery according to the first aspect of this application.

### [Positive electrode plate]

The positive electrode plate typically includes a positive electrode current collector and a positive electrode film layer provided on at least one surface of the positive electrode current collector, where the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene, and polyethylene (PE)).

In some embodiments, the positive electrode active material may be a well-known positive electrode active material used for batteries in the art. For example, the positive electrode active material may include at least one of the following: sodium transition metal oxide, polyanionic compound, and Prussian blue compound. However, this application is not limited to these materials, and other conventionally well-known materials that can be used as a positive active material for a sodium-ion battery may also be used.

In some embodiments, a transition metal in the sodium transition metal oxide may be at least one of Mn, Fe, Ni, Co, Cr, Cu, Ti, Zn, V, Zr, and Ce. The sodium transition metal oxide is, for example, NaₓM_{y}O₂, where M is one or more of Ti, V, Mn, Co, Ni, Fe, Cr, and Cu, 0 < x ≤ 1, and 0.5 < y ≤ 1.5.

In some embodiments, the polyanionic compound may be a type of compounds having sodium ions, transition metal ions, and tetrahedral-type (YO₄)ⁿ⁻ anionic units. The transition metal may be at least one of Mn, Fe, Ni, Co, Cr, Cu, Ti, Zn, V, Zr, and Ce; Y may be at least one of P, S, and Si; and n indicates a valence state of (YO₄)ⁿ⁻.

In some embodiments, the polyanionic compound may alternatively be a type of compounds having sodium ions, transition metal ions, tetrahedral-type (YO₄)ⁿ⁻ anionic units, and halogen anions. The transition metal may be at least one of Mn, Fe, Ni, Co, Cr, Cu, Ti, Zn, V, Zr, and Ce; Y may be at least one of P, S, and Si, and n indicates the valence state of (YO₄)ⁿ⁻; and the halogen may be at least one of F, Cl, and Br.

In some embodiments, the polyanionic compound may be a type of compounds having sodium ions, tetrahedral-type (YO₄)ⁿ⁻ anionic units, polyhedral units (ZO_{y})^{m+}, and selectable halogen anions. Y may be at least one of P, S, and Si, and n indicates a valence state of (YO₄)ⁿ⁻; Z indicates a transition metal and may be at least one of Mn, Fe, Ni, Co, Cr, Cu, Ti, Zn, V, Zr, and Ce, and m indicates the valence state of (ZO_{y})^{m+}; the halogen may be at least one of F, Cl, and Br.

In some embodiments, the polyanionic compound is, for example, at least one of NaFePO₄, Na₃V₂(PO₄)₃, NaM'PO₄F (M' is one or more of V, Fe, Mn, and Ni), and Na₃(VO_{y})₂(PO₄)₂F_{3-2y} (0 ≤ y ≤ 1).

In some embodiments, the Prussian blue compound may be a type of compounds having sodium ions, transition metal ions, and cyanide ions (CN). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are independently at least one of Ni, Cu, Fe, Mn, Co and Zn, 0 < a ≤ 2, 0 < b < 1, and 0 < c < 1.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, or silver alloy) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, or tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer may further optionally include a binder. For example, the binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative-electrode film layer further optionally includes a conductive agent. For example, the conductive agent may be selected from at least one of superconducting carbon, acetylene black, carbon black, Ketjen black, carbon dots, carbon nanotubes, graphene, or carbon nanofibers.

In some embodiments, the negative electrode film layer further optionally includes other additives such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Separator]

The secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

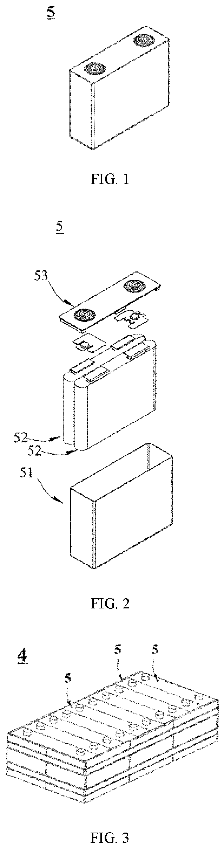

This application does not impose any special limitations on a shape of the secondary battery, and the secondary battery may be cylindrical, rectangular, or of any other shapes. For example, FIG. 1 is a secondary battery 5 of a square structure as an example.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to specific actual requirements.

A third aspect of this application provides a battery module including the secondary battery according to the second aspect of this application.

In some embodiments, the secondary battery may be assembled into a battery module, and the battery module may include one or more secondary batteries. The specific quantity may be chosen by persons skilled in the art according to use and capacity of the battery module.

FIG. 3 shows a battery module 4 as an example. Referring to FIG. 3, in the battery module 4, multiple secondary batteries 5 may be sequentially arranged in a length direction of the battery module 4. Certainly, the batteries may alternatively be arranged in any other manners. Further, the multiple secondary batteries 5 may be fastened by using fasteners.

Optionally, the battery module 4 may further include a housing with an accommodating space, and the multiple secondary batteries 5 are accommodated in the accommodating space.

A fourth aspect of this application provides a battery pack, including the battery module in the third aspect of this application.

In some embodiments, the battery module may be further assembled into a battery pack, and the battery pack may include one or more battery modules. The specific quantity may be chosen by persons skilled in the art according to use and capacity of the battery pack.

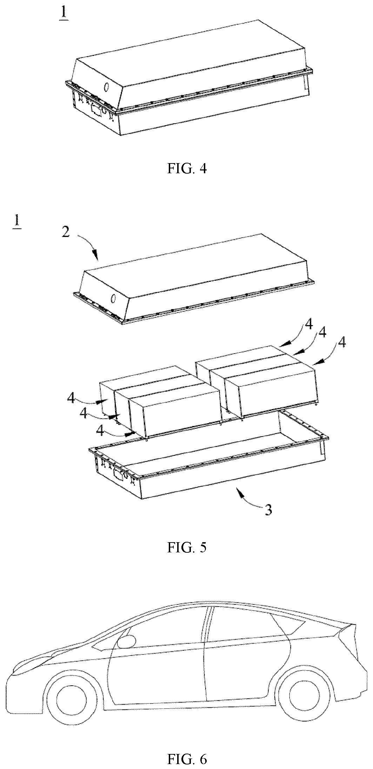

FIG. 4 and FIG. 5 show a battery pack 1 as an example. Referring to FIG. 4 and FIG. 5, the battery pack 1 may include a battery box and multiple battery modules 4 arranged in the battery box. The battery box includes an upper box body 2 and a lower box body 3. The upper box body 2 can cover the lower box body 3 to form an enclosed space for accommodating the battery modules 4. The multiple battery modules 4 may be arranged in the battery box in any manner.

In addition, a fifth aspect of this application provides an electric apparatus including at least one selected from the sodium-ion secondary battery according to the second aspect of this application, the battery module according to the third aspect of this application, or the battery pack according to the fourth aspect of this application. The sodium-ion secondary battery, the battery module, or the battery pack may be used as a power source for the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

The secondary battery, the battery module, or the battery pack may be selected for the electric apparatus based on requirements for using the electric apparatus.

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Preparation of secondary battery

(1) Preparation of the positive electrode plate: Sodium vanadium phosphate (Na₃V₂(PO₄)₃) as the active material, acetylene black as the conductive agent, and polyvinylidene fluoride (PVDF) as the binder were mixed in a weight ratio of 90:5:5 in N-methyl-2-pyrrolidone solvent. Solid content of the slurry is 45%. After thoroughly mixed, the slurry was applied onto an aluminum foil with a coating weight of 9 mg/cm². Followed by air-blowing drying at 130°C and final cold-pressing and cutting, positive electrode plates with a sheet width of 81 mm were obtained.
(2) Preparation of the negative electrode plate: Hard carbon as the active material, acetylene black as the conductive agent, styrene-butadiene rubber (SBR) as the binder, and carboxymethyl cellulose sodium (CMC) as the thickener were mixed in a weight ratio of 90:4:4:2 in deionized water solvent. Solid content of the slurry is 50%. After thoroughly mixed, the slurry was applied onto an aluminum foil with a coating weight of 4.5 mg/cm². Followed by air-blowing drying at 130°C and final cold-pressing and cutting, negative electrode plates with a sheet width of 85 mm were obtained.
(3) Separator: A porous polyethylene (PE) film was used as the separator, and the separator was cut into strips with a width of 91 mm.
(4) Electrolyte: The electrolyte was prepared as described below in the comparative examples and examples.
(5) Assembly of the full battery: The positive electrode plate, the separator, and the negative electrode plate were stacked in order, so that the separator was placed between positive and negative electrodes for insulation, and winding was performed to obtain a bare cell. The bare cell was placed in the outer package, the prepared electrolyte was injected, and then the outer package was sealed. An injection amount is 4 g/Ah.

### Comparative example 1

Preparation of the electrolyte: Ethylene carbonate (EC) and ethyl methyl carbonate (EMC) were mixed in a mass ratio of 30:70 and dissolved with 1M sodium hexafluorophosphate (NaPF₆). The prepared electrolyte is used for preparation of the secondary battery as described above.

### Comparative example 2

The electrolyte and sodium-ion secondary battery were prepared basically using the same method as in comparative example 1, with the difference from example 1 that 1wt% of SO₂ was added to the electrolyte based on total weight of the electrolyte.

### Comparative example 3

The electrolyte and sodium-ion secondary battery were prepared basically using the same method as in comparative example 1, with the difference from example 1 that 0.05wt% of sulfur dioxide (SO₂) was added to the electrolyte based on total weight of the electrolyte.

### Comparative example 4

The electrolyte and sodium-ion secondary battery were prepared basically using the same method as in comparative example 1, with the difference from example 1 that 10wt% of sulfur dioxide (SO₂) was added to the electrolyte based on total weight of the electrolyte.

### Comparative example 5

The electrolyte and sodium-ion secondary battery were prepared basically using the same method as in comparative example 1, with the difference from example 1 that 1wt% of 1,3-propane sultone (PS) was added to the electrolyte based on total weight of the electrolyte.

### Comparative example 6

The electrolyte and sodium-ion secondary battery were prepared basically using the same method as in comparative example 1, with the difference from example 1 that 1wt% of vinyl sulfate (DTD) was added to the electrolyte based on total weight of the electrolyte.

### Comparative example 7

The electrolyte and sodium-ion secondary battery were prepared basically using the same method as in comparative example 1, with the difference from example 1 that 1wt% of fluoroethylene carbonate (FEC) was added to the electrolyte based on total weight of the electrolyte.

### Comparative example 8

The electrolyte and sodium-ion secondary battery were prepared basically using the same method as in comparative example 1, with the difference from example 1 that 3wt% of fluoroethylene carbonate (FEC) was added to the electrolyte based on total weight of the electrolyte.

### Comparative example 9

The electrolyte and sodium-ion secondary battery were prepared basically using the same method as in comparative example 1, with the difference from example 1 that 10wt% of fluoroethylene carbonate (FEC) was added to the electrolyte based on total weight of the electrolyte.

### Comparative example 10

The electrolyte and sodium-ion secondary battery were prepared basically using the same method as in comparative example 1, with the difference from example 1 that 1wt% of 1,3-propane sultone (PS), 1wt% of vinyl sulfate (DTD), and 1wt% of fluoroethylene carbonate (FEC) were added to the electrolyte based on total weight of the electrolyte.

### Example 1

The electrolyte and sodium-ion secondary battery were prepared basically using the same method as in comparative example 1, with the difference from example 1 that 1wt% of SO₂ and 0.1wt% of triethylamine were added to the electrolyte based on total weight of the electrolyte.

### Example 2

The electrolyte and sodium-ion secondary battery were prepared basically using the same method as in comparative example 1, with the difference from example 1 that 1wt% of SO₂ and 1wt% of triethylamine were added to the electrolyte based on total weight of the electrolyte.

### Example 3

The electrolyte and sodium-ion secondary battery were prepared basically using the same method as in comparative example 1, with the difference from example 1 that 1wt% of SO₂ and 2wt% of triethylamine were added to the electrolyte based on total weight of the electrolyte.

### Example 4

The electrolyte and sodium-ion secondary battery were prepared basically using the same method as in comparative example 1, with the difference from example 1 that 1wt% of SO₂ and 5wt% of triethylamine were added to the electrolyte based on total weight of the electrolyte.

### Example 5

The electrolyte and sodium-ion secondary battery were prepared basically using the same method as in comparative example 1, with the difference from example 1 that 0.1wt% of SO₂ and 1wt% of triethylamine were added to the electrolyte based on total weight of the electrolyte.

### Example 6

The electrolyte and sodium-ion secondary battery were prepared basically using the same method as in comparative example 1, with the difference from example 1 that 2wt% of SO₂ and 1wt% of triethylamine were added to the electrolyte based on total weight of the electrolyte.

### Example 7

The electrolyte and sodium-ion secondary battery were prepared basically using the same method as in comparative example 1, with the difference from example 1 that 5wt% of SO₂ and 1wt% of triethylamine were added to the electrolyte based on total weight of the electrolyte.

### Example 8

The electrolyte and sodium-ion secondary battery were prepared basically using the same method as in comparative example 1, with the difference from example 1 that 1wt% of SO₂F₂ and 1wt% of triethylamine were added to the electrolyte based on total weight of the electrolyte.

### Example 9

The electrolyte and sodium-ion secondary battery were prepared basically using the same method as in comparative example 1, with the difference from example 1 that 1wt% of SF₄ and 1wt% of triethanolamine were added to the electrolyte based on total weight of the electrolyte.

### Example 10

The electrolyte and sodium-ion secondary battery were prepared basically using the same method as in comparative example 1, with the difference from example 1 that 1wt% of SF₆ and 1wt% of diethanolamine were added to the electrolyte based on total weight of the electrolyte.

### Example 11

The electrolyte and sodium-ion secondary battery were prepared basically using the same method as in comparative example 1, with the difference from example 1 that 1wt% of CS₂ and 1wt% of triethylene diamine were added to the electrolyte based on total weight of the electrolyte.

### Example 12

The electrolyte and sodium-ion secondary battery were prepared basically using the same method as in comparative example 1, with the difference from example 1 that 1wt% of SO₃ and 1wt% of hexamethylenetetramine were added to the electrolyte based on total weight of the electrolyte.

### Example 13

The electrolyte and sodium-ion secondary battery were prepared basically using the same method as in comparative example 1, with the difference from example 1 that 1wt% of SO₃, 1wt% of hexamethylenetetramine, and 1wt% of fluoroethylene carbonate (FEC) were added to the electrolyte based on total weight of the electrolyte.

### Example 14

The electrolyte and sodium-ion secondary battery were prepared basically using the same method as in comparative example 1, with the difference from example 1 that 1wt% of SO₃, 1wt% of hexamethylenetetramine, and 3wt% of fluoroethylene carbonate (FEC) were added to the electrolyte based on total weight of the electrolyte.

### Example 15

The electrolyte and sodium-ion secondary battery were prepared basically using the same method as in comparative example 1, with the difference from example 1 that 1wt% of SO₃, 1wt% of hexamethylenetetramine, and 10wt% of fluoroethylene carbonate (FEC) were added to the electrolyte based on total weight of the electrolyte.

### Sodium-ion secondary battery cycle capacity retention rate

At 25°C, the freshly prepared sodium-ion secondary batteries from the examples and comparative examples were left standing for 5 minutes, charged at a constant current of 1C to 4.2 V, charged at a constant voltage charge the current was less than or equal to 0.05C, left standing for 5 minutes, and discharged at a constant current of 1C rate to 2.0 V. This constitutes one charge-discharge cycle, and a discharge capacity of this cycle is recorded as a discharge capacity of the sodium-ion secondary battery for the 1st cycle. The sodium-ion secondary battery was tested according to the foregoing method for 800 charge and discharge cycles, and the discharge capacity of each cycle was recorded. Capacity retention rate (%) of sodium-ion battery after 800 1C/1C cycles at 25°C = 800th-cycle discharge capacity/1st-cycle discharge capacity × 100%.

### Direct current internal resistance test of sodium-ion secondary battery

At 25°C, the freshly prepared sodium-ion secondary batteries were left standing for 5 minutes, charged at a constant current of 1C rate to 4.2 V, charged at a constant voltage until the current was less than or equal to 0.05C. At this point, a state of charge (SOC) of the battery was 100%. Left standing for 5 minutes, the batteries were discharged at a constant current of 1C rate to adjust the state of charge (SOC) to 50%.

The sodium-ion secondary batteries with 50% SOC were left standing for 10 minutes and discharged at a constant current of 4C for 30 seconds. Voltage U1 at the last second of the standing period, voltage U2 at the last second of the 4C discharge, and current I during the 4C discharge were recorded.

The direct current internal resistance of the sodium-ion secondary battery at 25°C, 50% SOC, and a 4C discharge rate for 30 seconds = (U2 - U1)/I.

### Detection of sulfur-containing substance in air

The GT-1000 pump-type composite gas detector was placed 10 cm above the electrolyte surface, and the test results were read.

**Table 1: Percentages of additives and battery performance test results of examples and comparative examples**

| | Percentage of sulfur-containing compound (wt%) | Percentage of amine compound (wt%) | Sulfur gas content in air (ug/m³) | Percentag e of FEC addition | Direct current internal resistanc e (DCR) (mΩ) | Cycling capacity retentio n rate (%) |
|---|---|---|---|---|---|---|
| Example 1 | 1% of SO₂ | 0.1% of triethylamine | 516 | - | 33.5 | 89% |
| Example 2 | 1% of SO₂ | 1% of triethylamine | 50 | - | 33.7 | 91% |
| Example 3 | 1% of SO₂ | 2% of triethylamine | 20 | - | 34.6 | 86% |
| Example 4 | 1% of SO₂ | 5% of triethylamine | 10 | - | 35.2 | 79% |
| Example 5 | 0.1% of SO₂ | 1% of triethylamine | 11 | - | 36.1 | 76% |
| Example 6 | 2% of SO₂ | 1% of triethylamine | 65 | - | 34.5 | 87% |
| Example 7 | 5% of SO₂ | 1% of triethylamine | 73 | - | 36.3 | 86% |
| Example 8 | 1% of SO₂F₂ | 1% of triethylamine | 47 | - | 34.1 | 87% |
| Example 9 | 1% of SF₄ | 1% of triethanolamin e | 45 | - | 33.9 | 85% |
| Example 10 | 1% of SF₆ | 1% of diethanolamine | 41 | - | 34.5 | 86% |
| Example 11 | 1% of CS₂ | 1% of triethylenedia mine | 38 | - | 34.3 | 84% |
| Example 12 | 1% of SO₃ | 1% of hexamethylene tetramine | 32 | - | 34.7 | 85% |
| Example 13 | 1% of SO₂ | 1% of hexamethylene tetramine | - | 1% | 36.7 | 91% |
| Example 14 | 1% of SO₂ | 1% of hexamethylene tetramine | - | 3% | 37.1 | 89% |
| Example 15 | 1% of SO₂ | 1% of hexamethylene tetramine | - | 10% | 42.6 | 82% |
| Comparativ e example 1 | - | - | - | - | 38.5 | 70% |
| Comparativ e example 2 | 1% of SO₂ | / | 2300 | - | 33.2 | 88% |
| Comparativ e example 3 | 0.05% of SO₂ | - | - | - | 37.3 | 71% |
| Comparativ e example 4 | 10% of SO₂ | - | - | - | 48.6 | 79% |
| Comparativ e example 5 | 1% of PS | - | - | - | 51.4 | 78% |
| Comparativ e example 6 | 1% of DTD | - | - | - | 50.2 | 77% |
| Comparativ e example 7 | - | - | - | 1% | 40.6 | 84% |
| Comparativ e example 8 | - | - | - | 3% | 43.7 | 80% |
| Comparativ e example 9 | - | - | - | 10% | 54.8 | 75% |
| Comparativ e example 10 | 1% of DTD + 1% of PS | - | - | 1% | 55.5 | 74% |

Comparing experimental results of comparative examples 1-2, 5-6, and 10 with examples 1-4 and 13, it can be seen that as compared with commonly used sulfur-containing compounds PS/DTD, the use of low-boiling sulfur-containing compounds can effectively improve the internal resistance of the battery and significantly enhance the cycling performance at room temperature. This is because low-boiling sulfur-containing compounds not only reduce viscosity of the electrolyte but also form a stable and low-resistance passivation film on the negative electrode.

Comparing experimental results of comparative examples 2-4 with examples 1-7, it can be seen that when a percentage of SO₂ is 0.05wt% (referring to comparative example 3), there is no significant improvement in the cell internal resistance and cycling performance. This is because the percentage is small, a formed negative electrode passivation film is insufficient to prevent further reaction of the electrolyte. When the percentage of SO₂ is 10wt% (referring to comparative example 4), the cycling performance deteriorates because the excessive additive increases the internal resistance, leading to sodium deposition on the negative electrode during 1C/1C cycling.

It can be seen in experimental results of examples 1-12 that amine compounds can significantly reduce volatilization of gaseous sulfur-containing compounds.

Comparing the experimental results of comparative examples 7-9 with examples 13-15, it can be seen that addition of FEC as an additive on the basis of containing SO₂ further prolongs cycle life while slightly increasing the cell internal resistance. This is mainly because FEC and SO₂ form a tough and high-strength passivation film on surface of the positive and negative electrodes. In addition, the reduction potential of SO₂ is higher than that of FEC, so it can inhibit the reduction of FEC near the passivation film and thus suppress the deterioration of the internal resistance caused by FEC.

Comparing the experimental results of comparative example 2 with examples 8-12, it can be seen that other low-boiling sulfur-containing compounds can also improve the storage and cycling performance.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. An electrolyte for secondary batteries comprising an electrolyte salt, an organic solvent, and an additive,
wherein the additive comprises an amine compound and a sulfur-containing compound with a boiling point not greater than 70°C, wherein a mass percentage of the sulfur-containing compound in the electrolyte is 0.06% to 8%, optionally 0.08% to 6%, and a mass ratio of the sulfur-containing compound to the amine compound is 1:(0.08-13), optionally 1:(0.1-11), or further optionally 1:(0.5-2.5).

2. The electrolyte according to claim 1, wherein a mass percentage of the amine compound in the electrolyte is 0.06% to 8%, optionally 0.08% to 6%.

3. The electrolyte according to claim 1 or 2, wherein a combined mass percentage of the amine compound and sulfur-containing compound in the electrolyte is 0.5% to 10%, optionally 1% to 7%.

4. The electrolyte according to any one of claims 1 to 3, wherein the amine compound is selected from one or more compounds represented by the following formula I, formula II, and formula III: 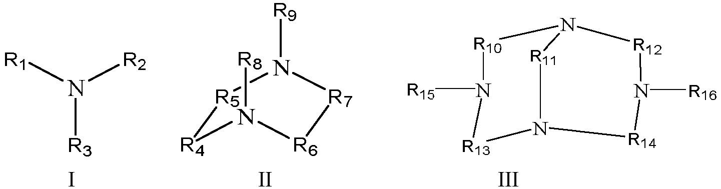
wherein R₁-R₃, R₈, R₉, R₁₅, and R₁₆ each independently are substituents selected from hydrogen atom, halogen atom, nitro group; and
a C₁-C₂₀ alkyl group, a C₂-C₂₀ alkenyl group, a C₆-C₂₆ aryl group, a C₁-C₂₀ alkylene carboxyl group, a carbonyl C₁-C₂₀ alkyl group, and a C₆-C₂₆ aryloxy group, optionally a C₁-C₆ alkyl group, and may further be optionally substituted with one or more groups selected from halogen atoms, a hydroxyl group, an amino group, a nitro group, a sulfonic acid group, and a sulfonyl group;
wherein R₁ is connected to R₂ or R₃, R₈ is connected to R₉, and R₁₅ is connected to R₁₆ via chemical bonds to form a C₁-C₂₀ alkylene group, a C₂-C₂₀ alkenylene group, C₆-C₂₆ arylene group, a carbonyl C₁-C₂₀ alkylene group, or a C₆-C₂₆ aryleneoxy group, optionally a C₁-C₆ alkylene group, wherein the substituents may further be optionally one or more groups selected from a C₁-C₆ alkyl group, halogen atoms, a hydroxyl group, an amino group, a nitro group, a carboxyl group, a sulfonic acid group, and a sulfonyl group; and
R₄-R₇ and R₁₀-R₁₄ each independently are substituents selected from a C₁-C₂₀ alkylene group, a C₂-C₂₀ alkenylene group, a C₆-C₂₆ arylene group, a carbonyl C₁-C₂₀ alkylene group, and a C₆-C₂₆ aryleneoxy group, optionally a C₁-C₆ alkylene group, wherein the substituents may further be optionally one or more groups selected from a C₁-C₆ alkyl group, halogen atoms, a hydroxyl group, an amino group, a nitro group, a carboxyl group, a sulfonic acid group, and a sulfonyl group;
wherein the halogen atoms are selected from one or more of F, Cl, and Br.

5. The electrolyte according to any one of claims 1 to 4, wherein the compound of formula I is selected from one or more of triethylamine, triethanolamine, diethylamine, diethanolamine, monoethylamine, monoethanolamine, 5-(diethylamino)pentylamine, 1-methylpyrrolidine, and triallylamine;
the compound of formula II is selected from one or more of triethylenediamine, 2-methyltriethylenediamine, 1,2-dimethylpiperazine, N-ethylpiperazine, 1-allylpiperazine, piperazine, and 1-ethylhomopiperazine; and
the compound of formula III is selected from one or more of hexamethylenetetramine, 1,3,6,8-tetraazatricyclo[4.3.1.13,8]undecane, 3,7-dimethyl-1,3,5,7-tetraaza Bicyclo[3.3.1]nonane, 1,3,5,7-tetraazabicyclo[3.3.1]nonane-3-methanamine, and N,N'-dinitrosopentamethylenetetramine.

6. The electrolyte according to any one of claims 1 to 5, wherein molecular weight of the sulfur-containing compound is 50 g/mol to 200 g/mol.

7. The electrolyte according to any one of claims 1 to 6, wherein the sulfur-containing compound is selected from one or more of sulfur hexafluoride, sulfur tetrafluoride, sulfuryl fluoride, sulfur dioxide, sulfur trioxide, carbon disulfide, dimethyl sulfide, methyl ethyl sulfide, sulfur monofluoride, sulfur difluoride, thionyl fluoride, and tetrafluorothionyl.

8. The electrolyte according to any one of claims 1 to 7, wherein the electrolyte salt is selected from one or more of NaPF₆, NaBF₄, NaN(SO₂F)₂, NaClO₄, NaAsF₆, NaB(C₂O₄)₂, NaBF₂(C₂O₄), NaN(SO₂R_{F})₂, and NaN(SO₂F)(SO₂R_{F}), wherein R_{F} represents C_{b}F_{2b+1}, wherein b is an integer in a range of 1 to 10, optionally in a range of 1 to 3, and further optionally, R_{F} is -CF₃, -C₂F₅, or -CF₂CF₂CF₃.

9. The electrolyte according to any one of claims 1 to 8, wherein the organic solvent comprises a carbonate-based organic solvent.

10. The electrolyte according to any one of claims 1 to 9, wherein the carbonate-based organic solvent is selected from one or more of ethylene carbonate, propylene carbonate, methylethyl carbonate, diethyl carbonate, dimethyl carbonate, dipropyl carbonate, methylpropyl carbonate, ethylpropyl carbonate, and butylene carbonate.

11. The electrolyte according to any one of claims 1 to 10, wherein the electrolyte further comprises fluoroethylene carbonate, wherein a mass percentage of fluoroethylene carbonate in the electrolyte is 0.01% to 10%, optionally 0.1% to 8%.

12. A secondary battery comprising a positive electrode plate, a separator, a negative electrode plate, and the electrolyte according to any one of claims 1 to 11.

13. A battery module, comprising the secondary battery according to claim 12.

14. A battery pack, comprising the battery module according to claim 13.

15. An electric apparatus, comprising at least one selected from the secondary battery according to claim 12, the battery module according to claim 13, or the battery pack according to claim 14.
